# EUROPÄISCHE PATENTSCHRIFT

(11) **EP 2 286 075 B1**
(45) Veröffentlichungstag und Bekanntmachung des Hinweises auf die Patenterteilung: **16.08.2017**
(21) Anmeldenummer: 09753755.9
(22) Anmeldetag: 22.04.2009
(51) Int. Cl.: F02D 41/20, F02D 41/22, H02N 2/06

(54) **VERFAHREN ZUM ERKENNEN EINER UNTERBRECHUNG IN MINDESTENS EINER ELEKTRISCHEN ZULEITUNG EINES PIEZOSTELLERS**
METHOD FOR RECOGNIZING AN INTERRUPTION IN AT LEAST ONE ELECTRIC FEEDER OF A PIEZO ACTUATOR
PROCÉDÉ D'IDENTIFICATION D'UNE INTERRUPTION DANS AU MOINS UNE LIGNE D'ALIMENTATION ÉLECTRIQUE D'UN ACTIONNEUR PIÉZOÉLECTRIQUE

(30) Priorität: 30.05.2008 DE 102008002131
(43) Veröffentlichungstag der Anmeldung: 23.02.2011
(73) Patentinhaber: Robert Bosch GmbH, 70442 Stuttgart (DE)
(72) Erfinder: ZU, Yanqi, 71665 Vaihingen (Enz) (DE); SCHEMPP, Stefan, 73249 Wernau (DE); BITZER, Matthias, 71116 Gaertringen (DE)
(86) Internationale Anmeldenummer: PCT/EP2009/054794
(87) Internationale Veröffentlichungsnummer: WO 2009/144100

(56) Entgegenhaltungen:
- EP-A2- 1 217 667
- WO-A1-01/28061
- WO-A1-2004/051066
- DE-A1- 19 733 560
- DE-A1- 19 845 042

## Beschreibung

Die Erfindung betrifft ein Verfahren und eine Anordnung zum Erkennen einer Unterbrechung in mindestens einer elektrischen Leitung, ein Computerprogramm und ein Computerprogrammprodukt.

### Stand der Technik

Einspritzanordnungen bzw. Einspritzsysteme für Verbrennungsmotoren sind dazu ausgebildet, Kraftstoff in eine Verbrennungskammer zu transportieren. Dabei werden die Steller des Einspritzsystems von einem Motorsteuergerät aus angesteuert. Ein sporadisches Unterbrechen einer zum Bestromen eines Stellers ausgebildeten Leitung des Einspritzsystems wird als Wackelkontakt bezeichnet. Insbesondere bei Einspritzsystemen mit Piezostellern kann ein derartiger Wackelkontakt problematisch werden. Hiervon ist bspw. der anhand eines Ablaufs beschriebene nachfolgende Fall betroffen.

Bei diesem Fall ist vorgesehen, dass eine elektrische Injektorleitung zur Stromversorgung des Piezostellers zunächst geschlossen ist. Dann erfolgt eine Ansteuerung, wobei der Piezosteller auf eine Zielspannung geladen wird, so dass die Einspritzung beginnt. In der Phase, in der der Piezosteller geladen ist, wird aufgrund des vorgesehenen Vorliegens eines Wackelkontakts eine der beiden Leitungen, über die der Piezosteller mit elektrischer Energie versorgt wird, unterbrochen, so dass die Injektorleitung geöffnet bleibt. Zu dem Zeitpunkt, an dem der Piezosteller wieder entladen werden soll, um die Einspritzung zu beenden, ist ein derartiges Entladen nicht möglich, da wegen der unterbrochenen elektrischen Leitung keine Ladung abgeführt werden kann. Daher kommt es zu einer Verlängerung der Einspritzung. Im Extremfall verlängert sich die Einspritzung, bis der Raildruck, d. h. ein Druck des Kraftstoffs in der Einspritzanordnung, soweit abgebaut ist, dass sich die Injektornadel selbstständig wieder schließt. Erst im Zeitintervall zwischen zwei aufeinander folgenden Einspritzungen schließt sich die Injektorleitung wieder. Danach beginnt der Vorgang wieder von vorne.

Durch diesen Ablauf ergeben sich mehrere viel zu lange Einspritzungen, so dass es zu Motorschäden kommen kann.

Bislang existiert keine Methode zur Erkennung eines derartigen Wackelkontakts. Die konventionelle Lastabfallerkennung versagt hier, da bei diesem Verfahren nur der Ladevorgang diagnostiziert wird, der in diesem Beispiel unauffällig abläuft.

Im Gegensatz dazu ist bei Magnetventilen im Falle einer unterbrochenen Leitung der Stromfluss sofort unterbrochen und das Magnetventil schließt sich wieder. Es ist demnach eigensicher.

Die Druckschrift EP 1138 905 B1 beschreibt ein Verfahren zum Erkennen einer Lastabnahme beim Ansteuern von piezoelektrischen Elementen, um einen Abfall der elektrischen Last eines oder mehrerer piezoelektrischen Elemente zuverlässig zu erkennen. Dabei wird ein Lastabfall eines piezoelektrischen Elements dadurch erkannt, dass überwacht wird, ob eine gewünschte Spannung an dem piezoelektrischen Element in weniger als einer vorbestimmten Minimalzeit erreicht wird. Wenn eine solche Spannung in weniger als der Minimalzeit erreicht wird, wird ein Signal erzeugt, um anzuzeigen, dass ein Lastabfall für dieses piezoelektrische Element aufgetreten ist. Mit einem derartigen Signal können Gegenmaßnahmen zur Fehlerbehebung eingeleitet werden. Alternativ kann die Fehlerbehebung zum Beispiel in der Werkstatt durchgeführt werden. Das erzeugte Signal kann auch zum Speichern einer Fehlernachricht in einem elektronischen Speicher verwendet werden.

Ferner zeigt die DE 198 45 042 A1 ein Verfahren und eine Anordnung zur Diagnose eines kapazitiven Aktors. Die Diagnose wird durchgeführt, indem einem Aktor über eine Umladeschaltung eine vorgebbare Energie zugeführt wird. Aus der Aktorspannung, dem Aktorstrom oder der Aktorladung wird durch Auswerten der Abweichung der ermittelten Werte von vorgegebenen Vergleichswerten auf fehlerhafte Funktionszustände des Aktors oder dessen Zuleitungen geschlossen. Auch die WO 01/28061 A1 beschreibt ein Überwachungsverfahren für einen piezoelektrischen Aktor. Zu Diagnose wird der Strom, der durch den Aktor fließt, mit einem Strom, der vor oder nach dem Aktor fließt, verglichen.

### Offenbarung der Erfindung

Die Erfindung betrifft ein Verfahren zum Erkennen einer Unterbrechung mindestens einer elektrischen Leitung, die innerhalb einer Einspritzanordnung für einen Verbrennungsmotor zum Versorgen eines Piezostellers mit elektrischer Energie ausgebildet ist. Bei diesem Verfahren wird ein Spannungsverlauf gemessen. Dabei wird für diesen Spannungsverlauf eine Entladezeit des Piezostellers bestimmt. Aufgrund einer Dauer dieser Entladezeit wird entschieden, ob die Unterbrechung vorliegt bzw. aufgetreten ist oder nicht.

Es ist hierbei u. a. vorgesehen, dass die Entladezeit innerhalb des Spannungsverlaufs rückvermessen wird. Üblicherweise wird der Spannungsverlauf und somit auch die Entladezeit von einer Komponente des Steuergeräts gemessen. Das Steuergerät ist über die mindestens eine elektrische Leitung mit dem Piezosteller verbunden. Der Piezosteller wird über die mindestens eine elektrische Leitung auch von dem Steuergerät bestromt. Mit dem Verfahren kann eine als Wackelkontakt ausgebildete Unterbrechung in der mindestens einen elektrischen Leitung erkannt werden. Der Piezosteller ist typischerweise über zwei elektrische Leitungen mit dem Steuergerät verbunden. Im Rahmen des Verfahrens kann die Unterbrechung unabhängig davon erkannt werden, ob nur eine der elektrischen Leitungen oder beide elektrische Leitungen unterbrochen sind.

Dabei ist vorgesehen, dass die Dauer der gemessenen Entladezeit mit einer unteren zeitlichen Schwelle T_{Low} und mit einer oberen zeitlichen Schwelle T_{High} verglichen wird. Falls eine Dauer der Entladezeit zwischen der unteren zeitlichen Schwelle T_{Low} und der oberen zeitlichen Schwelle T_{High} liegt, ist im Rahmen des Verfahrens vorgesehen, dass eine Bedingung für das Vorliegen der Unterbrechung und somit bspw. des Wackelkontakts innerhalb der mindestens einer elektrischen Leitung gegeben ist.

In Ausgestaltung des Verfahrens kann die obere zeitliche Schwelle T_{High} derart festgelegt werden, dass diese obere zeitliche Schwelle T_{High} mindestens einer Dauer einer Entladezeit entspricht, die sich ohne Vorliegen der Unterbrechung und somit des Wackelkontakts ergibt. Die Dauer dieser oberen zeitlichen Schwelle T_{High} kann aufgrund einer Ausbildung einer Anordnung, die den Piezosteller, die Einspritzanordnung bzw. ein entsprechendes Einspritzsystem sowie die mindestens eine elektrische Leitung, das Steuergerät und weiterhin die Bankspannungsmessbrücke umfassen kann, bestimmt und in einem Speichermodul des Steuergeräts abgelegt werden. Demnach ist die obere zeitliche Schwelle T_{High} in Abhängigkeit mindestens einer der voranstehend genannten Komponenten der Anordnung individuell zu bestimmen und/oder festzulegen. Die obere zeitliche Schwelle T_{High} kann in einer Versuchsreihe auch dadurch ermittelt werden, dass in einer Vielzahl von Versuchen künstlich Wackelkontakte in der Anordnung herbeigeführt werden. Aufgrund dabei gemessener Werte von Entladezeiten, die sich während derartiger Versuche ergeben, kann die obere zeitliche Schwelle T_{High} bestimmt werden. Es ist auch denkbar, dass die obere zeitliche Schwelle T_{High} aufgrund vielfach gemessener Entladezeiten, die während eines Betriebs der Anordnung gemessen werden, im Laufe des Betriebs der Anordnung aktualisiert wird.

Die untere zeitliche Schwelle T_{Low} kann derart festgelegt werden, dass diese untere zeitliche Schwelle T_{Low} höchstens einer Dauer einer Entladezeit entspricht, die sich bei Vorliegen eines Kurzschlusses in der mindestens einen elektrischen Leitung ergibt. Ähnlich wie im Fall der oberen zeitlichen Schwelle T_{High} können geeignete Werte für die untere zeitliche Schwelle T_{Low} in Versuchen bestimmt und in dem Speichermodul des Steuergeräts abgelegt werden. Hierbei ist es bspw. möglich, dass während einer Versuchsreihe Kurzschlüsse in der mindestens einen elektrischen Leitung künstlich herbeigeführt und dabei entstehende minimale Entladezeiten gemessen werden. Aus derartigen gemessenen Entladezeiten bei Vorliegen von Kurzschlüssen kann die untere zeitliche Schwelle T_{Low} für die Entladezeit ermittelt werden.

Die Erfindung betrifft weiterhin eine Anordnung zum Erkennen einer Unterbrechung in mindestens einer elektrischen Leitung, wobei diese mindestens eine elektrische Leitung innerhalb einer Einspritzanordnung für einen Verbrennungsmotor zum Versorgen eines Piezostellers mit elektrischer Energie ausgebildet ist. Die Anordnung ist dazu ausgebildet, für einen Spannungsverlauf eine Entladezeit des Piezostellers zu messen und aufgrund einer Dauer dieser Entladezeit zu entscheiden, ob die Unterbrechung vorliegt oder nicht.

Diese Anordnung kann als mindestens eine Komponente ein Steuergerät aufweisen, das über die mindestens eine elektrische Leitung mit dem Piezosteller verbunden ist. Dieses Steuergerät ist zum Messen des Spannungsverlaufs und somit auch der Entladezeit ausgebildet. Eine Messung des Spannungsverlaufs direkt am Piezosteller ist in der Regel technisch nicht umsetzbar. Durch die im Rahmen der Erfindung vorgesehene Vorgehensweise, die eine Auswertung und somit Analyse des Spannungsverlaufs und somit der Entladezeit umfasst, ist ein Erkennen des Wackelkontakts durch das ohnehin vorhandene Steuergerät möglich. Zum Messen der Spannung bzw. eines Spannungsverlaufs an dem Piezosteller weist das Steuergerät eine Bankspannungsmessbrücke auf. Es ist zudem vorgesehen, dass das Steuergerät dazu ausgebildet ist, den Piezosteller mit elektrischer Energie zu versorgen, wobei von dem Steuergerät über die mindestens eine elektrische Leitung während eines durchzuführenden Einspritzvorgangs eine hierfür erforderliche Spannung an dem Piezosteller angelegt wird.

Im Rahmen des Verfahrens erfolgt die Erkennung der Unterbrechung der Leitung im geladenen Zustand des Piezostellers bzw. eines sog. Piezoaktors über die Rückvermessung der Entladezeit.

Bei einer Variante der Erfindung ergibt sich, dass nicht nur die Rückvermessung des Ladevorgangs, sondern auch Daten über physikalische Parameter, bspw. Spannung oder Zeit sowie funktionelle Zusammenhänge von Spannung und Zeit aus der Entladephase verwendet werden.

Die aus Sicherheitsgründen kritische Situation bzgl. des Auftretens eines Wackelkontakts ergibt sich typischerweise dann, wenn die mindestens eine elektrische Leitung im geladenen Zustand des Piezostellers unterbrochen wird. Bei einer dauerhaften Unterbrechung kann der Fehler u. U. beim nächsten Ladeversuch erkannt werden. Im Fall eines aufgetretenen Wackelkontakts ist dies jedoch nicht möglich.

Bei einer Ausführung der Erfindung ergibt sich daher, dass auch für einen derartigen Fehler eine Diagnose möglich ist, so dass einer eventuellen Motorschädigung vorgebeugt werden kann. Bei Auftreten bzw. Vorliegen mindestens eines derartigen Wackelkontakts kann von dem Steuergerät ein Fehlerprotokoll bereitgestellt und ggf. weitergeleitet werden.

Die beschriebene Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Anordnung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einer erfindungsgemäßen Anordnung, ausgeführt wird.

Das Verfahren eignet sich bspw. dann, wenn die Injektorleitungen zur Bereitstellung des Kraftstoffs, die von Piezostellern beaufschlagt werden, zunächst geschlossen sind. Dann erfolgt eine Ansteuerung, wobei der Piezosteller bis zum Erreichen einer Zielspannung geladen wird, so dass die Einspritzung beginnt. In der Phase, in der der Piezosteller geladen ist, wird aufgrund des Vorliegens eines Wackelkontakts mindestens eine der beiden elektrischen Leitungen unterbrochen, so dass die Leitungen geöffnet bleiben. Zu dem Zeitpunkt, an dem der Piezosteller wieder entladen werden soll, um die Einspritzung zu beenden, ist ein derartiges Entladen nicht möglich, da wegen der unterbrochenen Leitung keine elektrische Ladung abgeführt werden kann, was zu einer Verlängerung der Einspritzung führt. Im Extremfall bleibt die elektrische Leitung so lange geöffnet und es erfolgt die Einspritzung, bis der Raildruck und demnach der Druck eines Kraftstoffs in der Einspritzanordnung soweit abgebaut ist, dass sich die Injektornadel selbstständig wieder schließt. Erst im Zeitintervall zwischen zwei Einspritzungen schließt sich die Injektorleitung wieder. Danach beginnt der Vorgang wieder von vorne.

Wie bereits beschrieben, kann ein Lastabfall, der im geladenen Zustand auftritt, bisher nicht erkannt werden. Mit der Erfindung wird in Ausgestaltung eine Funktion bereitgestellt, die dies ermöglicht. Bei Umsetzung des Verfahrens wird u. a. berücksichtigt, dass die Entladezeit bei Vorliegen eines Lastabfalls im geladenen Zustand deutlich kleiner als im fehlerfreien Zustand ist. Diese Entladezeit wird gemessen und plausibilisiert. Weist die Entladezeit einen Wert zwischen zwei kalibrierbaren Schwellen, nämlich der unteren Schelle T_{Low} und der oberen Schwelle T_{High} auf, so dass T_{Low} < Entladezeit < T_{High} ist, und entspricht die anliegende Spannung zu einem Zeitpunkt, bei dem der Entladevorgang beginnt, nämlich einer unteren Spannungsschwelle unterhalb der Spannungsschwelle für die Lastabfallerkennung beim Laden, so wird ein Lastabfall erkannt, der im geladenen Zustand eingetreten ist.

Die untere zeitliche Schwelle T_{Low} ist u. a. dazu vorgesehen, um eine Verwechslung mit anderen Defekten, z. B. einem Kurzschluss in der mindestens einen elektrischen Leitung, zu verhindern. Denn ein Kurzschluss führt auch zu einer sehr kurzen Entladezeit, die aber üblicherweise nahe bei 0 s liegt. Die Entladezeit bei der Lastabfallerkennung kann dagegen etwas länger sein.

Die Überprüfung der Spannung zum Zeitpunkt, bei dem der Entladevorgang beginnt, ist dazu vorgesehen, um über eine Unterscheidungsmöglichkeit darüber zu haben, ob ein Lastabfall beim Laden erfolgt. Abhängig von der Hardware des Steuergeräts, falls beim Laden und Lastabfall keine Erkennung in einer anwenderspezifisch integrierten Schaltung (ASIC) erfolgt, kann auch hier die Entladezeit deutlich kürzer werden, da auf den Piezosteller keine Ladung aufgebracht werden kann und somit nur die steuergerätinternen Kapazitäten aufgeladen werden, die üblicherweise sehr schnell entladen werden. Die steuergerätinternen Kapazitäten werden in diesem Fall auf eine deutlich über der Sollspannung U_{Soll} liegenden Spannung aufgeladen. Ein Vergleich einer derartigen Spannung ermöglicht dann die Unterscheidung zum Lastabfall im geladenen Zustand.

Durch Messung des Spannungsverlaufs bei einer Leitungsunterbrechung und bei einer entsprechender Diagnosereaktion kann auf eine im Rahmen der Erfindung vorgesehene Funktion zum Erkennen bzw. Nachweis der Unterbrechung geschlossen werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt in schematischer Darstellung ein Diagramm zu gemessenen Span-nungsverläufen.
- Figur 2: zeigt eine Ausführungsform einer erfindungsgemäßen Anordnung.

### Ausführungsformen der Erfindung

Die Erfindung ist anhand von Ausführungsformen in den Zeichnungen schematisch dargestellt und wird im folgenden unter Bezugnahme auf die Zeichnungen ausführlich beschrieben.

Die Figuren werden zusammenhängend und übergreifend beschrieben, gleiche Bezugszeichen bezeichnen gleiche Komponente oder Aspekte.

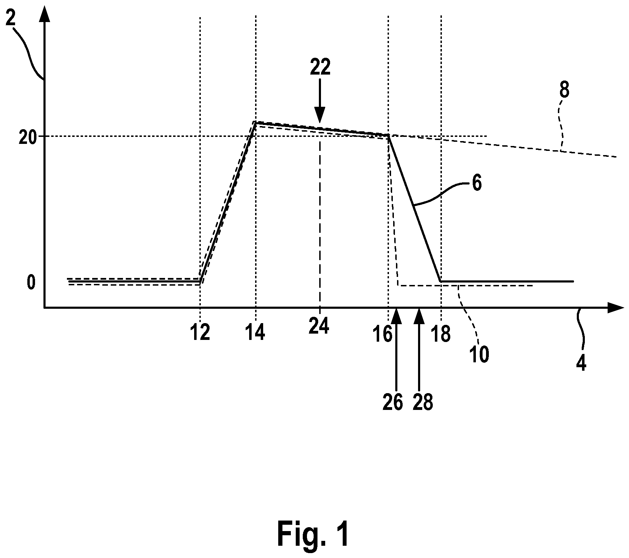

In dem Diagramm aus Figur 1 sind entlang einer vertikal orientierten Achse 2 für eine Spannung oberhalb einer horizontal orientierten Achse 4 für die Zeit drei unterschiedliche Spannungsverläufe 6, 8,10 aufgetragen, die sich während eines Einspritzvorgangs für ein Einspritzventil einer Einspritzanordnung für einen Piezosteller, der ein derartiges Einspritzventil beaufschlägt, ergeben.

Ein erster, idealer und somit fehlerfreier Spannungsverlauf 6 ergibt sich, wenn der Piezosteller über elektrische Leitungen ohne Auftreten einer Unterbrechung bestromt wird. Dabei entspricht der erste Spannungsverlauf 6 einer an dem Piezosteller anliegenden Spannung, wobei dieser erste Spannungsverlauf 6 unter Berücksichtigung herkömmlicher Messbedingungen auch von einem Steuergerät, das zugleich zur Bereitstellung elektrischer Energie für den Piezosteller über die mindestens eine elektrische Leitung ausgebildet ist, gemessen werden kann. Dieser erste Spannungsverlauf 6 zeigt ab dem zweiten Zeitpunkt 14 das Sollverhalten ohne Fehler.

Der zweite Spannungsverlauf 8 für den Piezosteller ergibt sich nach Auftreten des Wackelkontakts, der in einem Versuch durch üblicherweise kurzzeitiges Auftrennen mindestens einer elektrischen Leitung herbeigeführt werden kann. Der dritte Spannungsverlauf 10 wird durch das Steuergerät gemessen und ergibt sich bei Vorliegen des Wackelkontakts in der mindestens einen elektrischen Leitung. Daher entspricht der dritte Spannungsverlauf 10, der durch das Steuergerät gemessenen wird, der an dem Piezosteller anliegenden Spannung. Daher ist mit dem dritten Spannungsverlauf 10 ein typischer Spannungsverlauf eines Piezostellers im Falle eines Lastabfalls im geladenen Zustand dargestellt.

Ein Einspritzvorgang, der durch Betätigung des Einspritzventils durch einen Piezosteller herbeigeführt wird, ist durch vier Zeitpunkte 12, 14, 16, 18 charakterisiert. Hierbei wird der Piezosteller, an dem vor Beginn des Einspritzvorgangs keine Spannung anliegt, zwischen einem ersten Zeitpunkt 12 und einem zweiten Zeitpunkt 14 auf eine Abschaltspannung, die oberhalb einer Soll-Spannung 20 U liegt, geladen. Nach dem zweiten Zeitpunkt 14 klingen alle drei in dem Diagramm dargestellten Spannungsverläufe 6, 8, 10 bis zu einem dritten Zeitpunkt 16 auf diese Soll-Spannung 20 U ab.

Im Rahmen des vorliegenden Verfahrens ist vorgesehen, dass eine Unterbrechung 22 und somit der Wackelkontakt zu einem fünften Zeitpunkt 24 zwischen dem zweiten Zeitpunkt 14 und dem dritten Zeitpunkt 16 erfolgt. Mit dem dritten Zeitpunkt 16 beginnt der Entladevorgang, der bis zum vierten Zeitpunkt 18 abgeschlossen ist. Zu diesem dritten Zeitpunkt 16 wird der Entladevorgang mit einem voreingestellten Strom gestartet. Tritt, während der Piezosteller geladen ist, eine Leitungsunterbrechung auf, kann das Entladen zum dritten Zeitpunkt 16 nicht erfolgen, so dass sich ab dem dritten Zeitpunkt 16 für den Piezosteller der zweite Spannungsverlauf 8 ergibt, wobei der Piezosteller nur langsam über Kriechströme entladen wird, so dass die anhand des zweiten Spannungsverlaufs 8 dargestellte Spannung nur langsam abklingt.

Dieser zweite Spannungsverlauf 8 ist typischerweise nicht direkt messbar. Daher ist im Rahmen des Verfahrens vorgesehen, dass durch das Steuergerät über die mindestens eine elektrische Leitung, mit der das Steuergerät mit dem Piezosteller verbunden ist, der an dem Piezosteller anliegende dritte Spannungsverlauf 10 gemessen wird. Wegen der mindestens einen unterbrochenen bzw. aufgetrennten elektrischen Leitung werden allerdings nur die relativ kleinen Kapazitäten in einer Endstufe des Steuergeräts entladen. Der Entladevorgang ist deshalb deutlich vor Erreichen des vierten Zeitpunkts 18 beendet. Ein Vergleich des dritten Spannungsverlaufs 10, der sich bei Vorliegen des Wackelkontakts ergibt, mit dem ersten Spannungsverlauf 6, der sich bei einem fehlerfreien Betrieb ergibt, zeigt, dass eine Entladezeit, die bei idealen fehlerfreien Betrieb durch ein Intervall gegeben ist, das in der vorliegenden Ausführungsform durch den dritten Zeitpunkt 16 und den vierten Zeitpunkt 18 begrenzt ist, stark verkürzt ist. Der dritten Spannungsverlauf 10 wird in Ausgestaltung der Erfindung an einer Bankspannungsmessbrücke des Steuergeräts gemessen.

Daher kann bei Vorliegen einer verkürzten Entladezeit, wie sie durch den dritten Spannungsverlauf 10 wiedergegeben wird, ein Wackelkontakt in der mindestens einen elektrischen Leitung nachgewiesen werden. Eine Bedingung für das Vorliegen einer verkürzten Entladezeit kann durch Festlegen einer unteren zeitlichen Schwelle T_{Low} 26 und einer oberen zeitlichen Schwelle T_{High} 28 quantifiziert werden.

Die beiden zeitlichen Schwellen 26, 28 T_{Low}, T_{HIGH,} werden in der vorliegenden Ausführungsform ab dem dritten Zeitpunkt 16 gemessen. Falls die Dauer der Entladezeit nunmehr länger als die untere zeitliche Schwelle 26 T_{Low} und kürzer als die obere zeitliche Schwelle T_{High} ist, ist im Rahmen der Erfindung vorgesehen, dass es in mindestens einer elektrischen Leitung einen Wackelkontakt gab.

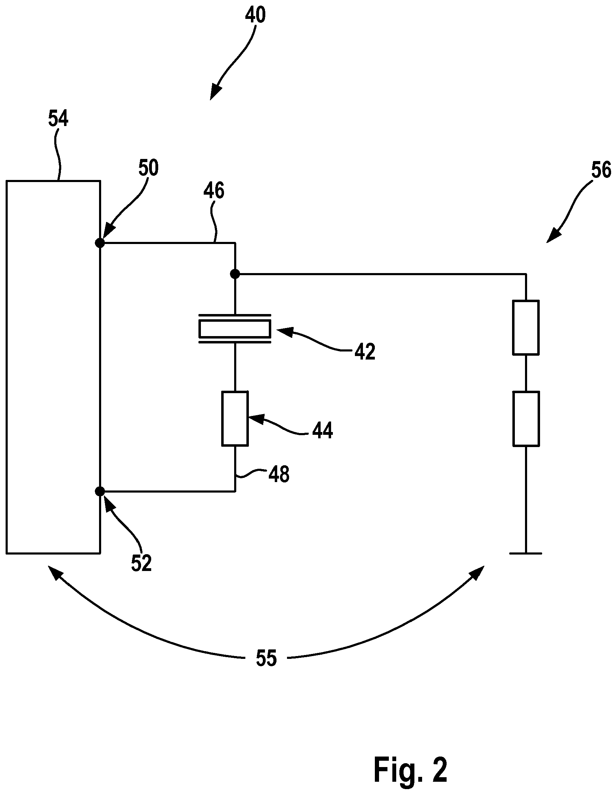

Figur 2 zeigt in schematischer Darstellung eine Ausführungsform einer erfindungsgemäßen Anordnung 40 für eine sog. Common-Rail-Einspritzanordnung bzw. ein Common-Rail-Einspritzsystem für einen Verbrennungsmotor.

Diese Anordnung 40 umfasst einen Piezosteller 42, der zur Beaufschlagung einer Ventilnadel der Einspritzanordnung ausgebildet ist. Dieser Piezosteller 42 ist mit einem Kabelbaum-Widerstand 44 in Reihe geschaltet. Der Piezosteller 42 und der Kabelbaum-Widerstand 44 sind über zwei elektrische Leitungen 46, 48 mit einem Pluspol 50 und einem Minuspol 52 eines ersten Steuergeräts 55 als eine Steuergerätekomponente 54 der Anordnung 40 verbunden. Es ist vorgesehen, dass das Steuergerät 55 dazu ausgebildet ist, den Piezosteller 42 über die elektrischen Leitungen 46, 48 mit elektrischer Energie zu versorgen, so dass an dem Piezosteller 42 bei idealem Betrieb eine Spannung anliegt, die es ermöglicht, ein Einspritzventil zur Durchführung eines Einspritzvorgangs zu beaufschlagen. Die gezeigte Anordnung 40 umfasst als zweite Steuergerätkomponente des Steuergerät 55 eine Bankspannungsmessbrücke 56, mit der die an dem Piezosteller 42 anliegende Spannung bei einer Ausführung des Verfahrens gemessen wird.

Das im Rahmen der Erfindung beschriebene Verfahren, ist dazu geeignet, einen Wackelkontakt in zumindest einer der beiden elektrischen Leitungen 46, 48 zu erkennen und demnach zu diagnostizieren. Bei Vorliegen eines derartigen Wackelkontakts ergibt sich, dass durch das Steuergerät 55 in Ausgestaltung der dritte Spannungsverlauf 10 aus dem Diagramm aus Figur 1 gemessen wird. Unabhängig davon, ob der Wackelkontakt vorliegt oder nicht, kann im Rahmen des Verfahrens ein durch das Steuergerät 55 gemessener Spannungsverlauf stets oder regelmäßig gemessen und dabei die Entladezeit des Piezostellers bestimmt werden. Ist eine Dauer der Entladezeit gegenüber einer Entladezeit bei fehlerfreiem Betrieb verkürzt, wird im Rahmen des Verfahrens festgestellt, dass der Wackelkontakt vorliegt.

## Patentansprüche

1. Verfahren zum Erkennen einer Unterbrechung mindestens einer elektrischen Leitung (46, 48), die innerhalb einer Einspritzanordnung für einen Verbrennungsmotor zum Versorgen eines Piezostellers (42) mit elektrischer Energie ausgebildet ist, bei dem für einen Spannungsverlauf (6, 8, 10) eine Entladezeit des Piezostellers (42) gemessen wird und aufgrund einer Dauer dieser Entladezeit entschieden wird, ob die Unterbrechung vorliegt oder nicht, **dadurch gekennzeichnet dass** eine als Wackelkontakt ausgebildete Unterbrechung in der mindestens eine elektrischen Leitung (46, 48) erkannt wird, wenn die Entladezeit länger als eine untere zeitliche Schwelle (26) T_{Low} und kürzer als eine obere zeitliche Schwelle (28) T_{High} ist.

2. Verfahren nach Anspruch 1, bei dem die Entladezeit rückvermessen wird.

3. Verfahren nach Anspruch 1, bei dem die obere zeitliche Schwelle (28) T_{High} derart festgelegt wird, dass diese obere zeitliche Schwelle (28) T_{High} mindestens einer Dauer einer Entladezeit entspricht, die sich ohne Vorliegen der Unterbrechung ergibt.

4. Verfahren nach Anspruch 1 oder 3, bei dem die untere zeitliche Schwellen (26) T_{Low} derart festgelegt wird, dass diese untere zeitliche Schwelle (26) T_{Low} höchstens einer Dauer einer Entladezeit entspricht, die sich bei Vorliegen eines Kurzschlusses in der mindestens einen elektrischen Leitung (46, 48) ergibt.

5. Anordnung zum Erkennen einer Unterbrechung in mindestens einer elektrischen Leitung (46, 48), wobei die mindestens eine Leitung (46, 48) innerhalb einer Einspritzanordnung für einen Verbrennungsmotor zum Versorgen eines Piezostellers (42) mit elektrischer Energie ausgebildet ist, wobei die Anordnung (40) dazu ausgebildet ist, für einen Spannungsverlauf (6, 8, 10) eine Entladezeit des Piezostellers (42) zu messen und aufgrund einer Dauer dieser Entladezeit zu entscheiden, ob die Unterbrechung vorliegt oder nicht, **dadurch gekennzeichnet, dass** die Anordnung eine als Wackelkontakt ausgebildete Unterbrechung in der mindestens eine elektrischen Leitung (46, 48) erkennt, wenn die Entladezeit länger als eine untere zeitliche Schwelle (26) T_{Low} und kürzer als eine obere zeitliche Schwelle (28) T_{High} ist.

6. Anordnung nach Anspruch 5, die ein Steuergerät (55) aufweist, das über die mindestens eine elektrische Leitung mit dem Piezosteller verbunden ist.

7. Anordnung nach Anspruch 6, bei der das Steuergerät (55) zum Messen des Spannungsverlaufs ausgebildet ist.

8. Anordnung nach Anspruch 6 oder 7, bei der das Steuergerät (55) dazu ausgebildet ist, den Piezosteller (42) mit elektrischer Energie zu versorgen.

9. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (40) nach einem der Ansprüche 7 bis 10, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (40) nach einem der Ansprüche 5 bis 8, ausgeführt wird.

## Claims

1. Method for detecting an interruption in at least one electrical lead (46, 48) which is formed within an injection arrangement for an internal combustion engine for supplying a piezo actuator (42) with electrical energy, in which method a discharge time of the piezo actuator (42) is measured for a voltage profile (6, 8, 10), and on the basis of a duration of this discharge time it is decided whether the interruption is present or not, **characterized in that** an interruption in the at least one electrical lead (46, 48) which is embodied as a loose contact is detected if the discharge time is longer than a lower chronological threshold (26) T_{low} and shorter than an upper chronological threshold (28) T_{high}.

2. Method according to-Claim 1, in which the discharge time is measured back.

3. Method according to Claim 1, in which the upper chronological threshold (28) Thigh is defined in such a way that this upper chronological threshold (28) Thigh corresponds at least to a duration of a discharge time which occurs without the presence of the interruption.

4. Method according to Claim 1 or 3, in which the lower chronological threshold (26) T_{low} is defined in such a way that this lower chronological threshold (26) T_{low} corresponds at most to a duration of a discharge time which occurs when a short circuit is present in the at least one electrical lead (46, 48).

5. Arrangement for detecting an interruption in at least one electrical lead (46, 48), wherein the at least one lead (46, 48) is formed within an injection arrangement for an internal combustion engine for supplying a piezo actuator (42) with electrical energy, wherein the arrangement (40) is designed to measure a discharge time of the piezo actuator (42) for a voltage profile (6, 8, 10) and to decide on the basis of a duration of this discharge time whether the interruption is present or not, **characterized in that** the arrangement detects an interruption in the at least one electrical lead (46, 48) which is embodied as a loose contact, if the discharge time is longer than a lower chronological threshold (26) T_{low} and shorter than an upper chronological threshold (28) Thigh.

6. Arrangement according to Claim 5 which has a control unit (55) which is connected to the piezo actuator via the at least one electrical lead.

7. Arrangement according to Claim 6, in which the control unit (55) is designed to measure the voltage profile.

8. Arrangement according to Claim 6 or 7, in which the control unit (55) is designed to supply the piezo actuator (42) with electrical energy.

9. Computer program with program code means for carrying out all the steps of a method according to one of Claims 1 to 4 when the computer program is executed on a computer or a corresponding computer unit, in particular in an arrangement (40) according to one of Claims 7 to 10.

10. Computer program product with program code means which are stored on a computer-readable data carrier in order to carry out all the steps of a method according to one of Claims 1 to 4 when the computer program is executed on a computer or a corresponding computer unit, in particular in an arrangement (40) according to one of Claims 5 to 8.

## Revendications

1. Procédé destiné à la reconnaissance d'une interruption d'au moins une ligne d'alimentation (46, 48) électrique qui est conçue à l'intérieur d'un système d'injection pour un moteur à combustion interne en vue de l'alimentation d'un actionneur piézoélectrique (42) en énergie électrique, pour lequel un temps de décharge de l'actionneur piézoélectrique (42) est mesuré pour une courbe de tension (6, 8, 10) et, sur la base d'une durée de ce temps de décharge, une décision est prise pour savoir si une interruption est présente ou non, **caractérisé en ce qu'**une interruption se présentant sous la forme d'un mauvais contact est identifiée dans l'au moins une ligne d'alimentation (46, 48) électrique, quand le temps de décharge est supérieur à un seuil temporel (26) inférieur T_{Low} et inférieur à un seuil temporel (28) supérieur T_{High}.

2. Procédé selon la revendication 1, pour lequel le temps de décharge est soumis à une mesure inverse.

3. Procédé selon la revendication 1, pour lequel le seuil temporel (28) supérieur T_{High} est déterminé de telle sorte que ce seuil temporel (28) supérieur T_{High} correspond au moins à une durée d'un temps de décharge qui se produit sans la présence de l'interruption.

4. Procédé selon la revendication 1 ou 3, pour lequel le seuil temporel (26) inférieur T_{Low} est déterminé de telle sorte que ce seuil temporel (26) inférieur T_{Low} correspond au plus à une durée d'un temps de décharge qui se produit en présence d'un court-circuit dans l'au moins une ligne d'alimentation (46, 48) électrique.

5. Agencement destiné à la reconnaissance d'une interruption dans au moins une ligne d'alimentation (46, 48) électrique, selon lequel l'au moins une ligne d'alimentation (46, 48) est conçue à l'intérieur d'un système d'injection pour un moteur à combustion interne en vue de l'alimentation d'un actionneur piézoélectrique (42) en énergie électrique, selon lequel l'agencement (40) est conçu en vue de mesurer un temps de décharge de l'actionneur piézoélectrique (42) pour une courbe de tension (6, 8, 10) et de décider sur la base d'une durée de ce temps de décharge s'il y a présence ou absence d'une interruption, **caractérisé en ce que** l'agencement identifie une interruption se présentant sous la forme d'un mauvais contact dans l'au moins une ligne d'alimentation (46, 48) électrique, quand le temps de décharge est supérieur à un seuil temporel (26) inférieur T_{Low} et inférieur à un seuil temporel (28) supérieur T_{High}.

6. Agencement selon la revendication 5, lequel présente un appareil de commande (55) qui est raccordé à l'actionneur piézoélectrique par l'intermédiaire de l'au moins une ligne d'alimentation électrique.

7. Agencement selon la revendication 6, pour lequel l'appareil de commande (55) est conçu en vue de la mesure de la courbe de tension.

8. Agencement selon la revendication 6 ou 7, pour lequel l'appareil de commande (55) est conçu en vue d'alimenter l'actionneur piézoélectrique (42) en énergie électrique.

9. Programme informatique avec des moyens de code de programmation en vue d'exécuter toutes les étapes d'un procédé selon l'une des revendications 1 à 4, quand le programme informatique est exécuté sur un ordinateur ou sur une unité de calcul correspondante, en particulier dans un agencement (40) selon l'une des revendications 7 à 10.

10. Produit de programme informatique avec des moyens de code de programmation qui sont enregistrés sur un support de données pouvant être lus par un ordinateur en vue d'exécuter toutes les étapes d'un procédé selon l'une des revendications 1 à 4, quand le programme informatique est exécuté sur un ordinateur ou sur une unité de calcul correspondante, en particulier dans un agencement (40) selon l'une des revendications 5 à 8.
